Europäisches Patentamt

European Patent Office

Office européen des brevets

(11) Veröffentlichungsnummer: **0 464 863 A2**

# EUROPÄISCHE PATENTANMELDUNG

(21) Anmeldenummer: **91113883.2**

(51) Int. Cl.5: **A47L 1/02**, B60S 1/34

(22) Anmeldetag: **25.07.88**

This application was filed on 20 - 08 - 1991 as a divisional application to the application mentioned under INID code 60.

(30) Priorität: **28.07.87 DE 3724856**

(43) Veröffentlichungstag der Anmeldung:
**08.01.92 Patentblatt 92/02**

(60) Veröffentlichungsnummer der früheren Anmeldung nach Art. 76 EPÜ: **0 302 343**

(84) Benannte Vertragsstaaten:
**ES FR GB IT SE**

(71) Anmelder: **SWF Auto-Electric GmbH**
**Stuttgarter Strasse 119 Postfach 1763**
**W-7120 Bietigheim-Bissingen(DE)**

(72) Erfinder: **Baumgarten, Peter**
**Rothinestrasse 60**
**W-8633 Rödental-Mönchröden(DE)**
Erfinder: **Bienert, Herbert**
**Ahornweg 15**
**W-7122 Besigheim(DE)**
Erfinder: **Egner-Walter, Bruno**
**Käferflugstrasse 43**
**W-7100 Heilbronn(DE)**
Erfinder: **Prohaska, Hans**
**Nelkenweg 44**
**W-7120 Bietigheim-Bissingen(DE)**
Erfinder: **Schmid, Eckhardt**
**Heilbronner Strasse 62**
**W-7129 Brackenheim(DE)**

(54) Scheibenreinigungsanlage.

(57) Die Erfindung betrifft eine Scheibenreinigungsanlage mit wenigstens einem auf einer Scheibe innerhalb eines Wischfeldes zwischen zwei Endlagen wenigstens annähernd linear und in wenigstens einer Betriebsart hin- und herbewegbaren, endseitig antreibbaren Scheibenreiniger.

Eine gute Scheibenreinigung unter Berücksichtigung der Witterungsverhältnisse und der gesetzlichen Vorschriften ist möglich, wenn ein Scheibenwischer in wenigstens einer Betriebsart in einem ersten Bereich des Wischfeldes mit einer ersten Geschwindigkeit und in einem zweiten Bereich des Wischfeldes mit einer zweiten, von der ersten Geschwindigkeit verschiedenen Geschwindigkeit antreibbar ist oder wenn in einer Betriebsart einer von zwei Scheibenreiniger mit einer ersten Geschwindigkeit und der andere Scheibenreiniger mit einer zweiten, von der ersten Geschwindigkeit verschiedenen Geschwindigkeit antreibbar ist.

Fig.1

Die Erfindung betrifft eine Scheibenreinigungsanlage mit wenigstens einem auf einer Scheibe innerhalb eines Wischfeldes zwischen zwei Endlagen wenigstens annähernd linear und in wenigstens einer Betriebsart hin- und herbewegbaren, endseitig antreibbaren Scheibenreiniger.

Es sind Scheibenreinigungsanlagen der verschiedensten Art bekannt. Hauptsächlich gebräuchlich sind solche, die einen oder mehrere Scheibenwischer besitzen, welche ein Wischblatt mit einer Wischleiste aus gummielastischem Werkstoff besitzen, die von einem Traggestell mit mehreren Bügeln gehalten werden, an dem im allgemeinen mittig ein in Längsrichtung über ein Ende des Wischblatts hinausreichender Wischarm angelenkt ist. Über den Wischarm kann der Scheibenwischer hin- und herpendelnd mittels einer motorisch antreibbaren Wischerwelle, die an dem wischblattfernen Ende des Wischarms angreift, derart angetrieben werden, daß er ein kreissegmentförmiges Wischfeld auf der Scheibe überstreicht (DE-PS 14 55 961). Es sind aber auch Scheibenreinigungsanlagen bekannt, die Scheibenwischer und Bürsten, Eiskratzleisten oder dergleichen aufweisen (DE-OS 34 47 055). Um ein Wisch- und/oder Reinigungsfeld zu erzielen, das bei viereckigen Scheiben bis in die Ecken reicht, ist es bekannt, sogenannte gesteuerte Wischblätter (DE-PS 21 32 496) oder Lineraranlagen (DE-OS 2 659 579, US-PS 4 257 138, FR-PS 2 230 193, US-PS 3 354 494) zu verwenden, bei denen ein Scheibenreiniger im wesentlichen parallel zu sich selbst über die zu reinigende Scheibe bewegt wird.

Der Erfindung liegt die Aufgabe zugrunde, eine Scheibenreinigungsanlage mit den Merkmalen aus dem Oberbegriff des Anspruchs 1 so weiterzubilden, daß die Reinigungswirkung unter Berücksichtigung der gesetzlichen Vorschriften gut an die herrschenden Witterungsverhältnisse angepaßt werden kann.

Diese Aufgabe wird für eine Scheibenreinigungsanlage mit den Merkmalen aus dem Oberbegriff des Anspruchs 1 dadurch gelöst, daß ein Scheibenreiniger in wenigstens einer Betriebsart in einem ersten Bereich des Wischfeldes mit einer ersten Geschwindigkeit und in einem zweiten Bereich des Wischfeldes mit einer zweiten, von der ersten Geschwindigkeit verschiedenen Geschwindigkeit antreibbar ist oder daß in einer Betriebsart einer von zwei Scheibenreiniger mit einer ersten Geschwindigkeit und der andere Scheibenreiniger mit einer zweiten, von der ersten Geschwindigkeit verschiedenen Geschwindigkeit antreibbar ist.

Mit einer erfindungsgemäßen Scheibenreinigungsanlage kann ein Scheibenbereich, durch den die Sicht hindurch sehr wichtig ist, leicht öfter gereinigt werden als ein anderer Scheibenbereich, dessen Reinigung weniger wichtig ist.

Auch kann man erreichen, daß in einem wichtigen Sichtbereich einer Scheibe, z. B. unmittelbar vor dem Fahrer eines Kraftfahrzeugs, der Scheibenreiniger eine größere Geschwindigkeit hat als in einem anderen Bereich der Scheibe und damit weniger lang die freie Sicht behindert.

Vorteilhafte Ausgestaltungen einer erfindungsgemäßen Scheibenreinigungsanlage sind in den Unteransprüchen enthalten.

Besonders soll auf die Ausgestaltung nach Anspruch 9 hingewiesen werden, durch die mit zwei Scheibenreinigern, die ihre Parkstellung am selben Scheibenrand haben, sowohl eine Reinigung der ganzen Scheibe als auch eine höhere Anzahl von Reinigungsvorgängen in der einen Hälfte der Scheibe erzielt werden.

Weitere vorteilhafte Einzelheiten und Ausgestaltungen der Erfindung sind aus weiteren Unteransprüchen sowie aus den nachfolgend erläuterten Zeichnungen ersichtlich, die Ausführungsbeispiele zeigen.

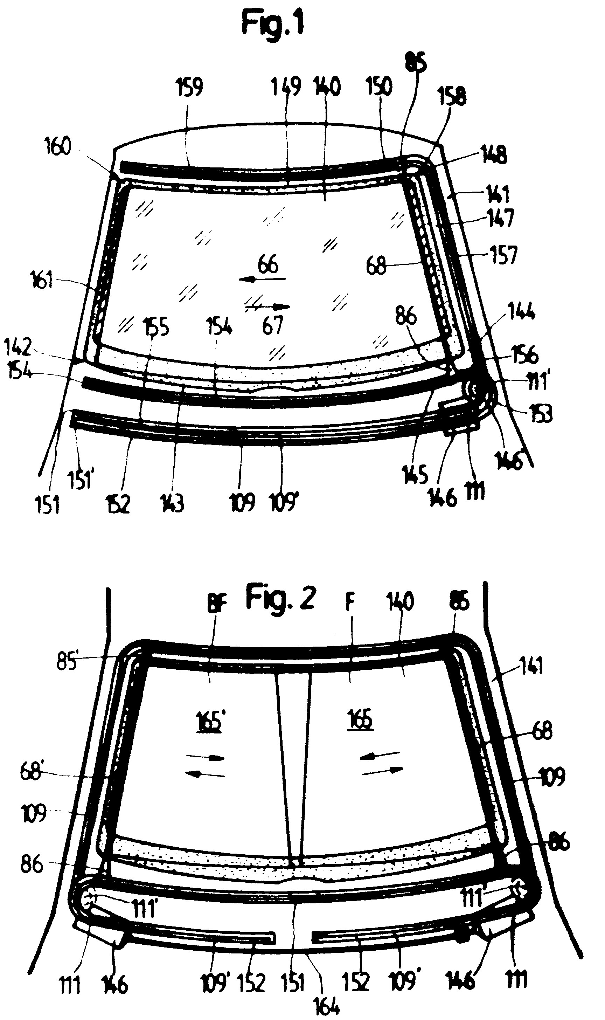

Dabei ist dargestellt in
Figur 1
im prinzipiellen Aufbau ein erstes Ausführungsbeispiel mit nur einem Scheibenreiniger, in
Figur 2
im prinzipiellen Aufbau ein zweites Ausführungsbeispiel mit zwei Scheibenreinigern, in den
Figuren 3a bis 3d
verschiedene Bewegungsablaufarten der in Figur 1 dargestellten Anlage und in den
Figuren 4a bis 4d
verschiedene Bewegungsstadien der Scheibenreiniger nach Figur 2.

In Figur 1 ist eine Scheibenreinigungsanlage prinzipiell dargestellt, welche zum Reinigen der Windschutzscheibe 140 eines Kraftfahrzeugs 141 vorgesehen ist. Diese Scheibenreinigungsanlage ist eine Linearwischeranlage mit einem horizontal in den Pfeilrichtungen 66 und 67 über die Scheibe 140 bewegbaren Scheibenwischer 68. Die Scheibe 140 ist hier trapezförmig ausgebildet.

Als Antriebsmittel für den Scheibenwischer 68 sind zwei gleich ausgebildete, flexible, aber biegesteife Zug-/Druckelemente 109 und 109' vorgesehen. Diese könnten Stahlseile, Zahnriemen oder dergleichen sein, bestehen aber hier jeweils aus einem Seil und einer Vielzahl von im wesentlichen kugelförmigen Gliedern, die lose auf dem Seil aufgereiht sind.

Die Antriebsmittel 109 und 109' sind U-förmig verlegt, und zwar derart, daß das eine, welches mit dem Bezugszeichen 109 bezeichnet ist, unterhalb der einen unteren Scheibenecke, hier der linken unteren Scheibenecke 142, geradeaus unterhalb des unteren Scheibenrandes 143 bis über die andere untere Scheibenecke 144 hinaus verläuft, ein in deren Bereich angeordnetes Antriebsrad 111 umschlingt, und kurz hinter diesem bei 145 endet. Hier greift das untere Ende des Scheibenwischers 68 über einen Mitnehmer 86 am Antriebsmittel 109 an. Das andere, mit dem Bezugszeichen 109' bezeichnete Antriebsmittel verläuft zunächst parallel oberhalb des Antriebsmittels 109 bis über die untere rechte Scheibenecke 144 hinaus, in deren Bereich es ein Antriebsrad 111' umschlingt, welches kleiner als das Antriebsrad 111 und mit diesem auf einer gemeinsamen Antriebswelle 146' angeordnet ist, welche die Abtriebswelle eines umpolbaren Elektromotors 146 ist. Hinter dem Antriebsrad 111' verläuft das Antriebsmittel 109' entlang des rechten, seitlichen Scheibenrandes 147, anschließend um die rechte obere Scheibenecke 148 und noch ein Stück parallel zum oberen Scheibenrand 149 und endet dann bei 150. Hier greift das obere Ende des Scheibenwischers 68 über einen Mitnehmer 85 am Antriebsmittel 109' an. Zwischen dem Scheibenwischer 68 und den Mitnehmern 85, 86 ist ein nicht dargestellter Mechanismus zum Längenausgleich des Scheibenwischers 68 während der Bewegungsabläufe vorgesehen.

Sowohl das Antriebsmittel 109 als auch das Antriebsmittel 109' sind jeweils in einem U-förmigen Führungskanal bzw. Gehäuse 151 bzw. 151' geführt. Das Gehäuse 151 für das Antriebsmittel 109, an welchem der Scheibenwischer 68 über seinen am unteren Ende angeordneten Mitnehmer 86 angreift, verläuft dabei von einer unterhalb der linken unteren Scheibenecke 142 liegenden Stelle mit einem geraden Abschnitt 152 parallel zum unteren Scheibenrand 143, dann im Bereich des Antriebsrades 111 mit einem gekrümmten Abschnitt 153 im Gegenuhrzeigersinn um dieses und anschließend mit einem geraden Abschnitt 154 oberhalb des Abschnitts 152 zur linken unteren Scheibenecke 142. Das Gehäuse 151' für das Antriebsmittel 109', an welchem der Scheibenwischer 68 über seinen am oberen Ende angeordneten Mitnehmer 85 angreift, verläuft mit einem ersten geraden Abschnitt 155 oberhalb des Abschnitts 152 des Gehäuses 151, dann im Bereich des Antriebsrades 111' mit einem gekrümmten Abschnitt 156 im Gegenuhrzeigersinn um dieses, weiter mit einem geraden Abschnitt 157 entlang des rechten, seitlichen Scheibenrandes 147, anschließend mit einem gekrümmten Abschnitt 158 im Gegenuhrzeigersinn um die rechte obere Scheibenecke 148 und schließlich mit einem geraden Abschnitt 159 parallel zum oberen Scheibenrand 149 bis in den Bereich der linken oberen Scheibenecke 160. In der Praxis sind dabei die Gehäuse 151 und 151', von unten her betrachtet, bis zum Abschnitt 154 des Gehäuses 151 von Karosserieteilen abgedeckt.

Wenn sich der Scheibenwischer 68 in der in Figur 1 dargestellten Position befindet, sind der Abschnitt 154 des Gehäuses 151 zur Führung des mit dem unteren Ende des Scheibenwischers 68 verbundenen Antriebsmittels 109 und der Abschnitt 159 des Gehäuses 151' zur Führung des mit dem oberen Ende des Scheibenwischers 68 verbundenen Antriebsmittels 109' leer. Wenn sich die Antriebswelle 146' und damit jedes Antriebsrad 111 und 111' im Gegenuhrzeigersinn dreht, werden die Antriebsmittel 109 und 109' und damit der Scheibenwischer 68 in Pfeilrichtung 66 nach links bewegt. Der am unteren Ende des Scheibenwischers 68 befindliche Mitnehmer 86 wird dabei schneller bewegt als der am oberen Ende des Scheibenwischers 68 befindliche Mitnehmer 85, da das Antriebsmittel 109 für den Mitnehmer 86 mit dem größeren Antriebsrad 111 zusammenwirkt. Das Größenverhältnis der Antriebsräder 111 und 111' ist dabei derart auf die Trapezform der Scheibe 140 abgestimmt, daß der Mitnehmer 86 fast die linke untere Scheibenecke 142 erreicht hat, wenn der Mitnehmer 85 fast die linke obere Scheibenecke 152 erreicht hat. Demgemäß wird auf der Scheibe 140 ein trapezförmiges Wischfeld erzielt, das fast vom rechten seitlichen Scheibenrand 147 bis zum linken seitlichen Scheibenrand 161, und, da der Scheibenwischer 68 einen relativ langen Wischgummi besitzt, fast vom oberen Scheibenrand 149 bis nahe zum unteren Scheibenrand 143 reicht. Dann sind der Abschnitt 152 des Gehäuses 151 und der Abschnitt 154 des Gehäuses 151' leer.

Wenn der Scheibenwischer 68 auf die zuvor beschriebene Weise fast den linken seitlichen Scheibenrand 161 erreicht hat, wird der Motor 146 umgepolt, so daß sich die Antriebswelle 146' und damit jedes Antriebsrad 111 und 111' im Uhrzeigersinn dreht, und es werden die Antriebsmittel 109 und 109' und damit der Scheibenwischer 68 in Pfeilrichtung 67 nach rechts bewegt.

Ein besonderer Vorteil dieser Scheibenreinigungsanlage ist, daß aufgrund der zuvor beschriebenen Anordnung des Motors 146 unterhalb der Scheibenecke 144, aber im Bereich der Längenausdehnung der Scheibe 140 bzw. der Breitenausdehnung des Fahrzeugs 141, die Antriebsmittel 109 und 109' überall, wie zuvor beschrieben, nahe der zu reinigenden Scheibe 140 verlaufen können und weder seitlich noch ober- oder unterhalb der Scheibe 140 außerhalb der üblichen Fahrzeugmaße bzw. in einen ungünstigen Fahrzeugraum hin, z.B. in den Motorraum hin, Ausweichraum benötigen. Der gleiche Effekt wäre natürlich erzielbar, wenn der Motor 146 bzw. ein anderer Motor im Bereich einer anderen als der dargestellten Scheibenecke, z.B. unterhalb der Scheibenecke 142 oder oberhalb der Scheibenecke 148 und im Bereich der Längenausdehnung der Scheibe 140 angeordnet wird. (Die Antriebsmittel 109 und 109' sowie Gehäuse 151 und 151' müßten dann spiegelbildlich zu Figur 1 angeordnet werden.) Die letztgenannte Variante wäre für Fahrzeuge mit großem Überbau über der Scheibe geeignet, z.B. für Lastkraftwagen. Die Scheibenreinigungsanlage beruht somit auf dem Grundgedanken, den Antrieb (Antriebsrad bzw. -räder und Motor) in einem Umkehrbereich des Scheibenwischers, aber ober- bzw. unterhalb versetzt zu und innerhalb der Längenausdehnung seiner Bewegungsbahn anzuordnen und dadurch eine günstige Antriebsmittelverlegung erzielen zu können.

In Figur 2 ist eine weitere Scheibenreinigungsanlage zum Reinigen einer trapezförmigen Scheibe ausgebildet. Die Scheibe ist hier wieder - wie bei der anhand von Figur 1 beschriebenen Anlage - Die Windschutzscheibe 140 eines Kraftfahrzeugs 141.

Im Unterschied zu der anhand von Figur 1 beschriebenen Anlage besitzt die Anlage zwei Scheibenwischer 68 und 68', deren Parkstellung im Bereich des rechten seitlichen Scheibenrandes 147 bzw. des linken seitlichen Scheibenrandes 161 vorgesehen ist. Diese sind wiederum beidendig über jeweils einen Mitnehmer 85 bzw. 85' und 86 bzw. 86' mit zwei gleich ausgebildeten, flexiblen, aber biegesteifen Zug-Druckelementen 109 und 109' als Antriebsmittel verbunden, die gleichartig wie die anhand der Figur 1 beschriebenen verlegt und antreibbar sind. Sie sind lediglich spiegelbildlich zueinander angeordnet und der Abschnitt 152 des Gehäuses 151 ist kürzer als bei Figur 1 ausgebildet.

Die einzelnen Bauteile der Scheibenreinigungsanlage, die gleich wie bei der in Figur 1 dargestellten ausgebildet sind, sind in Figur 2 mit den gleichen Bezugszeichen wie in Figur 1 versehen. Bezüglich ihrer Beschreibung wird auf die der Figur 1 verwiesen.

Die Elektromotoren 146 sind über eine zuschaltbare Synchronwelle 164 miteinander verbunden. Die Scheibenreinigungsanlage ist derart elektrisch geschaltet, daß der Scheibenwischer 68 ein trapezförmiges Feld 165 auf der Fahrerseite F und der Scheibenwischer 68' ein trapezförmiges Feld 165'auf der Beifahrerseite BF des Kraftfahrzeugs 141 reinigen kann.

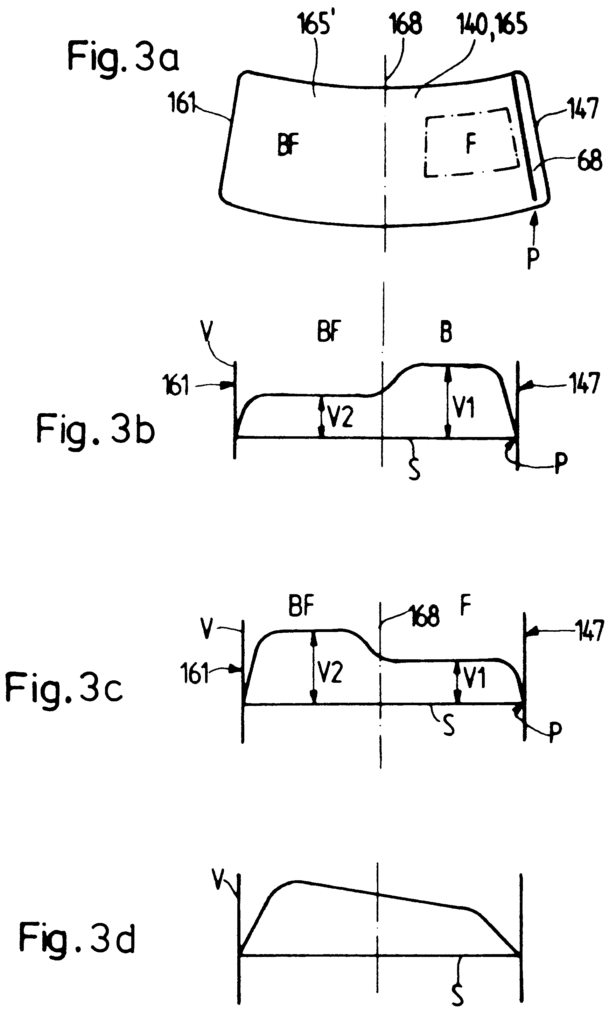

In den Figuren 3a bis 3e ist dargestellt, wie die in Figur 1 dargestellte Scheibenreinigungsanlage speziell betrieben werden kann. Dabei ist in Figur 3a die Anlage vereinfacht dargestellt. Darunter sind drei Diagramme und eine Skizze gezeigt. Auf den Senkrechten der drei Diagramme 3b - 3d ist dabei die Geschwindigkeit v und auf den Waagerechten der Weg s des Scheibenwischers 68 angegeben. Mit der Linie 168 ist die Mitte der Scheibe 140 gekennzeichnet.

Bei den in den Diagrammen 3b und 3c dargestellten Varianten wird der Scheibenwischer 68 mit unterschiedlichen Geschwindigkeiten v1 und v2 zwischen den seitlichen Scheibenrändern 147 und 161 bewegt. Dabei wird er bei der Variante 3b auf der Fahrerseite F von der Parkstellung P aus bis zur Mittellinie 168 mit einer Geschwindigkeit v1 bewegt, die im Bereich der Mittellinie 168 ziemlich abrupt auf die Geschwindigkeit v2 gesenkt wird, mit der die Beifahrerseite BF bis zum Scheibenrand 161 gewischt wird. Somit wird hier die Fahrerseite F schnell und die Beifahrerseite BF langsamer gereinigt.

Bei der in Figur 3c dargestellten Variante sind die Verhältnisse umgekehrt. Es wird zunächst von der Parkstellung P aus die Fahrerseite F bis zur Mittellinie 168 mit einer Geschwindigkeit v1 gewischt, die im Bereich der Mittellinie ziemlich abrupt auf die Geschwindigkeit v2 gesteigert wird, mit der die Beifahrerseite BF bis zum Scheibenrand 161 gewischt wird. Somit wird hier die Fahrerseite F langsam und die Beifahrerseite BF schneller gereinigt.

Das Diagramm 3d ähnelt Diagramm 3c bis auf die Tatsache, daß die Geschwindigkeit v nicht abrupt geändert wird, sondern linear, also im wesentlichen von einer Endlage zur anderen Endlage zu- bzw. abnimmt.

In den Figuren 4a bis 4d ist ein möglicher Bewegungsablauf bei einer Horizontal-Wischeranlage mit zwei Scheibenwischern 68 und 68' skizziert, wie sie in Figur 1 oder 2 gezeigt ist. In Figur 4a ist die Anlage vereinfacht dargestellt, und zwar mit den Scheibenwischern 68 und 68' in Parkposition.

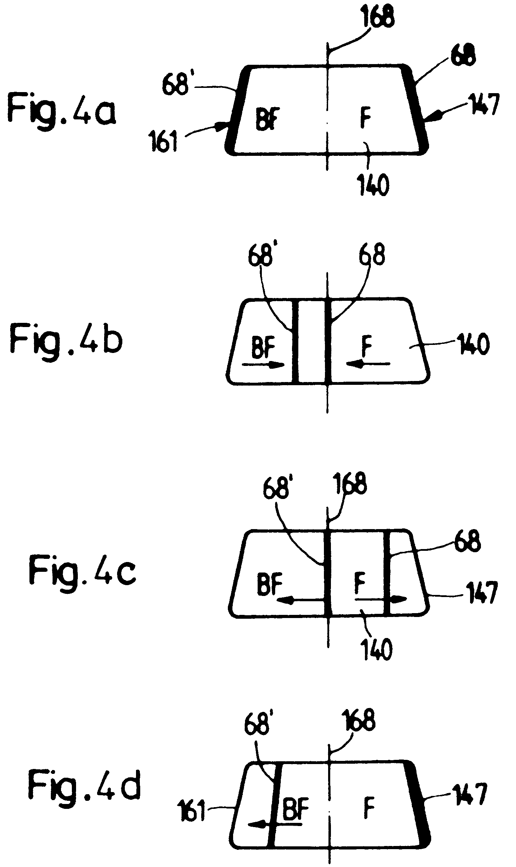

Aus Figur 4b ist ersichtlich, daß der zum Wischen der Fahrerseite F vorgesehene Scheibenwischer 68 schneller läuft als der zum Wischen der Beifahrerseite BF vorgesehene Scheibenwischer 68'. Ersterer hat hier die Mittellinie 168 der Scheibe 140 erreicht, letzterer noch nicht.

Aus Figur 4c ist ersichtlich, daß sich der Scheibenwischer 68 bei der Rückbewegung von der Mittellinie 168 zum seitlichen Scheibenrand 147 auf der Fahrerseite F etwa in der Mitte des Scheibenbereichs auf der Fahrerseite F befindet, wenn der Scheibenwischer 68' die Mittellinie 168 der Scheibe 140 erreicht hat.

Figur 4d zeigt, daß sich der Scheibenwischer 68' bei der Rückbewegung von der Mittellinie 168 zum seitlichen Scheibenrand 161 auf der Beifahrerseite BF etwa in der Mitte des Scheibenbereichs auf der Beifahrerseite BF befindet, wenn der Scheibenwischer 68 den seitlichen Scheibenrand 147 auf der Fahrerseite F erreicht hat.

Jeder der zuvor beschriebenen Bewegungsabläufe hat Vorteile. Die spezielle Bewegungsablaufwahl hängt von den individuellen Anforderungen an die Scheibenreinigungsanlage ab.

**Patentansprüche**

1. Scheibenreinigungsanlage mit wenigstens einem auf einer Scheibe innerhalb eines Wischfeldes zwischen zwei Endlagen wenigstens annähernd linear und in wenigstens einer Betriebsart hin- und herbewegbaren, endseitig antreibbaren Scheibenreiniger, dadurch gekennzeichnet, daß ein Scheibenreiniger (68) in wenigstens einer Betriebsart in einem ersten Bereich des Wischfeldes mit einer ersten Geschwindigkeit und in einem zweiten Bereich des Wischfeldes mit einer zweiten, von der ersten Geschwindigkeit verschiedenen Geschwindigkeit antreibbar ist oder daß in einer Betriebsart einer von zwei Scheibenreinigern (68, 68') mit einer ersten Geschwindigkeit und der andere Scheibenreiniger (68', 68) mit einer zweiten, von der ersten Geschwindigkeit verschiedenen Geschwindigkeit antreibbar ist.

2. Scheibenreinigungsanlage nach Anspruch 1, dadurch gekennzeichnet, daß zur Reinigung der Windschutzscheibe eines Kraftfahrzeugs ein einziger Scheibenreiniger (68) auf der Fahrerseite schneller antreibbar ist als auf der Beifahrerseite.

3. Scheibenreinigungsanlage nach Anspruch 1, dadurch gekennzeichnet, daß zur Reinigung der Windschutzscheibe eines Kraftfahrzeugs ein einziger Scheibenreiniger (68) auf der Fahrerseite langsamer antreibbar ist als auf der Beifahrerseite.

4. Scheibenreinigungsanlage nach Anspruch 1, dadurch gekennzeichnet, daß die Geschwindigkeit eines Scheibenreinigers (68) in der einen Bewegungsrichtung im wesentlichen von einer Endlage zur anderen Endlage zunimmt und in umgekehrter Bewegungsrichtung abnimmt.

5. Scheibenreinigungsanlage nach Anspruch 1, dadurch gekennzeichnet, daß zwei Scheibenreiniger (68, 68') mit unterschiedlichen Geschwindigkeiten in einer Betriebsart verschiedene Bereiche (BF, F) einer Scheibe reinigen.

6. Scheibenreinigungsanlage nach Anspruch 5, dadurch gekennzeichnet, daß die beiden Bereiche (BF, F) der Scheibe völlig getrennt voneinander sind.

7. Scheibenreinigungsanlage nach Anspruch 5 oder 6, dadurch gekennzeichnet, daß die Parkstellung der Scheibenreiniger (68, 68') im Bereich der Scheibenmitte vorgesehen ist.

8. Scheibenreinigungsanlage nach Anspruch 5 oder 6, dadurch gekennzeichnet, daß die Scheibenreiniger (68, 68') ihre Parkstellung im Bereich gegenüberliegender Scheibenränder (147, 161) besitzen.

9. Scheibenreinigungsanlage nach Anspruch 5, dadurch gekennzeichnet, daß die beiden Scheibenreiniger ihre Parkstellung im Bereich des gleichen Scheibenrandes besitzen und daß der weiter innen liegende Scheibenreiniger mit einer bestimmten Geschwindigkeit die ganze Scheibe und der weiter außen liegende Scheibenreiniger mit etwa der halben Geschwindigkeit die Scheibe nur etwa bis zur Mitte reinigt.

10. Scheibenreinigungsanlage nach einem vorhergehenden Anspruch, dadurch gekennzeichnet, daß jeder Scheibenreiniger (68, 68') von einem in seiner Drehrichtung umkehrbaren Elektromotor (146) antreibbar ist.

# Fig.1

# Fig. 2

Fig. 3a

Fig. 3b

Fig. 3c

Fig. 3d

7

Fig. 4a

Fig. 4b

Fig. 4c

Fig. 4d